# EUROPEAN PATENT SPECIFICATION

(11) **EP 3 748 550 B1**
(45) Date of publication and mention of the grant of the patent: **11.11.2026**
(21) Application number: 19178958.5
(22) Date of filing: 07.06.2019
(51) Int. Cl.: G06N 3/0464, G06N 3/09

(54) **METHOD FOR LEARNING FROM DATA WITH LABEL NOISE**
VERFAHREN ZUM LERNEN VON DATEN MIT ETIKETTENRAUSCHEN
PROCÉDÉ D'APPRENTISSAGE À PARTIR DE DONNÉES À BRUIT D'ÉTIQUETTE

(43) Date of publication of application: 09.12.2020
(73) Proprietor: Siemens Healthineers AG, 91301 Forchheim (DE)
(72) Inventor: Ghesu, Florin-Cristian, Lawrence Twp. 08648 (US); Kraus, Martin, 90765 Fürth (DE)
(74) Representative: Siemens Healthineers Patent Attorneys

(56) References cited:
- US-A1- 2017 293 609
- US-A1- 2019 114 544
- ONOFREY JOHN A ET AL: "Generalizable Multi-Site Training and Testing Of Deep Neural Networks Using Image Normalization", 2019 IEEE 16TH INTERNATIONAL SYMPOSIUM ON BIOMEDICAL IMAGING (ISBI 2019), IEEE, 8 April 2019 (2019-04-08), pages 348 - 351, XP033576465, DOI: 10.1109/ISBI.2019.8759295
- KOSTAS HATALIS ET AL: "Smooth Pinball Neural Network for Probabilistic Forecasting of Wind Power", ARXIV.ORG, CORNELL UNIVERSITY LIBRARY, 201 OLIN LIBRARY CORNELL UNIVERSITY ITHACA, NY 14853, 4 October 2017 (2017-10-04), XP080826137

## Description

The present invention refers to a system and computer-implemented method for performing at least one inference task on medical input data. The present invention further refers to a system and computer-implemented method for training an artificial neural network. The present invention also refers to a non-transitory computer-readable data storage medium and a computer program product.

In the field of artificial intelligence, in particular of machine learning, labels play an important role as the basis for supervised learning. Labels associate training examples of a training data set with respective ground truths. Then, an artificial neural network can be trained to minimize an error of its predictions (or: inferences), when taking one of the training examples as input, compared to the ground truth (or label) for the same training example.

Labelled training data are an important and valuable resource in machine learning, and lack of sufficient training data is often one of the main obstacles for a specific machine learning project. Procuring labelled training data is, on the other hand, often comparatively expensive, as for example for image classification human labelers have to be employed to label images. Although some image classification tasks are relatively easy for humans, mistakes may be made when labelling, for example due to carelessness, lack of concentration, lack of knowledge. Other image classification tasks, in particular in the medical domain, are very complex and highly dependent on e.g. a physician's experience and sometimes intuition.

In this context, label noise is a common problem. Label noise means that the labelling for a certain training example may not be consistent over the whole training data set, or that labels for different training examples may be mutually contradictive or exclusive. This makes it difficult to use training data sets with high label noise for training artificial neural networks, as the corresponding cost or loss function will in some cases penalize a correct inference and/or reward a wrong inference.

For example, radiologists may provide labels (e.g. segmentation masks, scores, boundary equations and/or the like) for a given set of images. Due to their different experience, problem difficulty, lack of attention or other random effects, two raters might differ in their opinion ("inter-rater variability"), thus labelling the same image (or: training example) differently, leading to label noise. Another example is if a single rater labels similar examples differently, or labels one and the same example different at different points in time ("intra-rater variability").

Usually, the amount of label noise increases for harder problems, in particular for harder examples of a given problem. In the most general case, label noise can be seen as uncertainty or inconsistency of labels of data, regardless of its origin.

Conventional machine learning systems, models and algorithms can be negatively affected when learning from inconsistent and/or conflicting labels and therefore might produce suboptimal results that are difficult to interpret or have a lower trust rating.

One attempt in the prior art to cope with label noise can be found e.g. in the scientific publication by Wang et al.: "Multiclass learning with partially corrupted labels", "IEEE transactions on neural networks and learning systems 29.6 (2018) :2568-2580.

In addition, conventional machine learning systems, models and algorithms often provide answers for inference tasks but cannot give their users a sense of how these answers have been reached or how confident the system is in these answers. This negatively impacts, or in the worst case eliminates, the usability of the systems as in many cases it is desired to have a reasoned answer or at least an answer that gives a user an idea of how accurate the answer is.

US 2019/114544 A1 refers to constructing a convolutional neural network-based classifier for variant classification. In particular, it relates to training a convolutional neural network-based classifier on training data using a backpropagation-based gradient update technique that progressively matches outputs of the convolutional network network-based classifier with corresponding ground truth labels.

The article Kostas Hatalis et al.: "Smooth Pinball Neural Networks for Probabilistic Forecasting of Wind Power", Arxiv.Org, Cornell University Library, 201 Olin Library Cornell University Ithaca, NY, 4 October 2017, XP080826137, refers to an uncertainty analysis in the form of probabilistic forecasting that may significantly improves the decision making processes in the smart power grid for better integrating renewable energy sources such as wind. This paper analyzes the effectiveness of an approach for non-parametric probabilistic forecasting of wind power that combines a smooth approximation of the pinball loss function with a neural network architecture and a weighting initialization scheme to prevent the quantile cross over problem.

Against this background, one of the objects of the present invention is to provide a system for performing at least one inference task on medical input data that is more robust against noisy input data and which gives more insight into its results for inference tasks, as well as to provide a corresponding method and a method for training such as system. The afore-mentions object is solved by systems, computer-implemented methods, computer-readable data storage medium and computer program product having the features of the independent claims.

According to a first aspect of the present invention, a system for performing at least one inference task on medical input data according to claim 1 is provided.

In order to facilitate understanding, in the present text, when we discuss a quantile (or percentile), we are talking about the abstract quantity itself, not of its value. The value itself will mostly be designated as "output value corresponding to the quantile", or alternatively as "value of the quantile". For example, it may be stated that for a certain inference task, an output node corresponding to the 30th percentile is provided, and that the output value of the output node corresponding to that 30th percentile is 0.2, meaning that 30% of a distribution are smaller or equal to 0.2. Our terminology is therefore slightly different from other terminologies such as "The 30th percentile of that distribution is 0.2".

When herein different quantiles are referred to (e.g. "first quantile", "second quantile"), this is supposed to be understood to mean quantiles of the same type, i.e. all are x-quantiles, x being a natural number. For example, the two 2-quantiles, the three 3-quantiles, the four 4-quantiles, ..., the 100-quantiles ("percentiles") and so on.

In general, the artificial neural network may be configured to receive a tensor as an input and to output at least one tensor as the result of the at least one inference task. The tensor may in particular be a matrix or a vector.

The artificial neural network is configured to receive an image as an input and to output at least one class as the result of the at least one inference task (i.e. at least one inference task may be a classification task).

In statistics and probability quantiles are cut points dividing the range of a probability distribution into continuous intervals with equal probabilities, or dividing the observations in a sample in the same way. One example of quantiles are percentiles (100-quantiles).

A percentile (or a centile) is a measure used in statistics indicating the value below which a given percentage of observations in a group of observations falls. For example, the 20th percentile is the value (or score) below which 20% of the observations may be found. The 0th percentile is usually defined as the lowest value of the distribution, and the 100th percentile as its highest value.

A well-known quantile is the median, which may also be designated as the 2-quantile or as the 50th percentile. The median is a value for a distribution which separates the distribution into two equally-sized groups, or, in other words: the median is defined such that half the values of the distribution are smaller than the median and half are larger than the median. The same applies in analogy to the other quantiles and percentiles. For example, the 20th percentile (or: first 5-quantile) is a value defined such that 20% of the values of a distribution are smaller than said value.

By providing outputs that relate to quantiles, a user of the system of the present invention is provided with additional information about the internal state of the system in the sense that the user understands better with which degree of certainty one of the output results is output.

For example, a conventional system may receive a medical scan image as input and may output, after classification by an artificial neural network, an object within the scan image as a tumor. This is one type of output result. Other output results may e.g. comprise a vector giving coordinates of a bounding box for the tumor, the dimensions of the bounding box, and so on.

With the present invention, now each of a plurality of inference tasks (for example, the object classification labels for each classified and/or detected object) are not only represented, or solved, by a single output node, but by a plurality of output nodes, of the same number as the plurality of pre-defined quantiles. For example, if the 15th, the 30th, the 50th, the 70th and the 85th percentile were the pre-defined quantiles, then five output nodes would represent each of the chosen inference tasks.

Instead of simply receiving, as in conventional systems, a single value as the result of an inference task (for example, an average value), the user of the system described herein obtains the output of the output nodes corresponding to each of the pre-defined quantiles and can therefore better judge the meaning and reliability of the result as well as the internal state of the artificial neural network.

One of the key advantages of the present invention is that uncertainty in labels can be dealt with by learning based on noisy targets and custom loss functions. Then the trained model outputs quantiles (preferably percentiles) that can be interpreted as corresponding to the behavior of a set of virtual voters. Interpreted in another way, the output values corresponding to the different quantiles are a probability map giving an indication of the confidence of the system in its own output.

A quantile (or percentile) at which a certain output value of an inference task changes from zero to a non-zero value (e.g. to one) may, for example, be used as an indication of the reliability of an image segmentation. For example, when the output value corresponding to the 50th percentile is 0, and the output value for the 60th percentile and onwards is 1, this indicates that the "votes" on this particular inference task are divided 50/50. The system may be configured to output a warning signal to its user when a change in output values larger than a pre-defined threshold appears in a certain range, or over a certain pre-defined threshold, of quantiles. The warning signal may be visually output by a visual output device of the system (e.g. output by a display of the system as text or symbols, or by an LED of the system), acoustically output by an acoustic output device of the system (such as a spoken warning message or a sound signal output by a loudspeaker or headphone of the system) or haptically output by a haptic output device of the system (e.g. a vibration by a vibrator).

For example in the above case with the 50/50 division, the warning signal may prompt the user (e.g. a physician) to disregard the output of this particular inference task, or to provide additional data, or to seek other confirmation or corroboration and/or the like.

In the case of segmentation tasks in particular, the output values corresponding to different quantiles can be indicated as such visually. Note that each segment to be identified in a particular segmentation task may be characterized as one separate inference task in the present application.

In general, the present invention allows a natural handling of inconsistency or noise in labels, and therefore makes the generation of labelled training examples easier and eventually cheaper. In particular, the present invention allows using multiple raters to label training examples without the need for the raters to concur on each label, and without the need for the number of raters to be the same for each training example.

The computing device may be realized in hardware, such as a circuit or a printed circuit board and/or comprising transistors, logic gates and other circuitry. Additionally, the computing device may be at least partially realized in terms of software. Accordingly, the computing device may comprise a processor (such as at least one CPU and/or at least one GPU) and a memory storing a software or a firmware that is executed by the processor to perform the functions of the computing device.

The computing device may also be realized as a cloud computing platform.

In systems based on cloud computing technology, a large number of devices is connected to a cloud computing system via the Internet. The devices may be located in a remote facility connected to the cloud computing system. For example, the devices can comprise, or consist of, equipments, sensors, actuators, robots, and/or machinery in an industrial set-up(s). The devices can be medical devices and equipments in a healthcare unit. The devices can be home appliances or office appliances in a residential/commercial establishment.

The cloud computing system may enable remote configuring, monitoring, controlling, and maintaining connected devices (also commonly known as 'assets'). Also, the cloud computing system may facilitate storing large amounts of data periodically gathered from the devices, analyzing the large amounts of data, and providing insights (e.g., Key Performance Indicators, Outliers) and alerts to operators, field engineers or owners of the devices via a graphical user interface (e.g., of web applications). The insights and alerts may enable controlling and maintaining the devices, leading to efficient and fail-safe operation of the devices. The cloud computing system may also enable modifying parameters associated with the devices and issues control commands via the graphical user interface based on the insights and alerts.

The cloud computing system may comprise a plurality of servers or processors (also known as 'cloud infrastructure'), which are geographical distributed, connected with each other via a network. A dedicated platform (hereinafter referred to as 'cloud computing platform') is installed on the servers/processors for providing above functionality as a service (hereinafter referred to as 'cloud service'). The cloud computing platform may comprise a plurality of software programs executed on one or more servers or processors of the cloud computing system to enable delivery of the requested service to the devices and its users.

One or more application programming interfaces (APIs) are deployed in the cloud computing system to deliver various cloud services to the users.

The ANN comprises an output layer which comprises one respective output node corresponding to each quantile out of the plurality of pre-defined quantiles for each inference task. For example, if a number of k quantiles are pre-defined and there is a number of m inference tasks, then the output layer comprises at least k*m output nodes. In this way, a user of the system obtains insight into the internal state of the system regarding its reliability for each of the inference tasks.

The number of quantiles for each inference task may be different in some cases, or, in other words, the number of quantiles for at least one inference task may be different from the number of quantiles for at least one other inference task. For example, one inference task may be solved by the results, or output values, of five output nodes, corresponding e.g. to the 15th, 30th, 50th, 70th, and 85th percentile, respectively. Another inference task may be solved by the results, or output values, of only four output nodes, corresponding e.g. to the first, second, third and fourth quartile (4-quantile), respectively. In this way, the desired number of quantiles can be directly tailored to the nature and the requirements of each inference task.

The artificial neural network is configured to receive medical imaging data as the medical input data, and at least one inference task comprises classification of features of the medical imaging data into at least one of a plurality of classes. The features to be classified may e.g. by pixels of the medical imaging data. The classification may comprise segmentation. For example, the task may comprise to classify for each pixel of the medical imaging data whether it belongs to the background or to an object out of a list of at least one objects, such as to classify for each pixel whether it belongs to a human spine or not.

Other inference tasks may comprise object detection, object localization and/or the like.

In some advantageous embodiments, variants, or refinements of embodiments, the quantiles are percentiles. Percentiles are an intuitive way to present estimates of reliability for the result of an inference task.

In some advantageous embodiments, variants, or refinements of embodiments, the system and/or the artificial neural network of the system is configured to output at least one output image. In particular, the system may receive images as its input ("input images") and may then provide at least one output image as its output. Output values of output nodes corresponding to different quantiles for the same inference task may be indicated differently in said at least one output image. For example, in a task to classify pixels as to whether they belong to a specific object (e.g. to a specific organ), pixels in the output image may be colored different corresponding to which percentile of virtual raters would rate the corresponding pixel to belong to said specific object. For instance, red (or a first pattern) may indicate that over 90% of virtual raters agree that that pixel belongs to the object, yellow (or a second pattern) may indicate that 50% of virtual raters would say so and green (or a third pattern) may indicate that only 10% of virtual raters would say so. The invention also provides, according to a second aspect, a computer-implemented method for performing at least one inference task on medical input data according to claim 5.

In some advantageous embodiments, variants, or refinements of embodiments of the method, an output value corresponding to each quantile out of the plurality of pre-defined quantiles is output for each inference task.

Medical imaging data are input as the medical input data, and at least one inference task comprises classification of features of the medical imaging data into at least one of a plurality of classes.

In some advantageous embodiments, variants, or refinements of embodiments of the method, the quantiles are percentiles. The invention further provides, according to a third aspect, a computer-implemented method for training an artificial neural network for at least one inference task on medical input data according to claim 6.

The method according to the third aspect is in particular configured to train an artificial neural network for use in any embodiment of the system according to the first aspect and/or in any embodiment of the method according to the second aspect of the present invention.

In some advantageous embodiments, variants, or refinements of embodiments of the training method, the individual loss terms utilize a weighted L1 norm.

In some advantageous embodiments, variants, or refinements of embodiments, the cost function comprises a weighted sum over the individual loss terms. In this way the training can be performed such that quantiles (or percentiles) that are the most important, or most meaningful, for a specific inference task, have a greater influence during training so that the trained artificial neural network will better learn to get those quantiles right.

In some advantageous embodiments, variants, or refinements of embodiments of the training method, the cost function penalizes when an output node corresponding to a (comparatively) higher quantile outputs a value that is lower than an output node corresponding to a (comparatively) lower quantile for the same inference task. In other words, the cost function penalizes when an output node corresponding to a first quantile outputs a value that is lower than an output node corresponding to a second quantile for the same inference task when the second quantile is lower than the first quantile, in the sense that the i-th x-quantile is smaller than the (i+1)-th x-quantile (e.g. the first 4-quantile, or quartile, is smaller than the second quartile) and the j-th percentile is smaller than the (j+1)-th percentile. Thus, another way to put it is that for each i-th quantile within the pre-defined quantiles, the cost function penalizes when an output node corresponding to that i-th quantile outputs a value that is lower than an output node for a j-th quantile of the pre-defined quantiles when j<i.

Such a cost formula makes use of the known properties of quantiles to help training the artificial neural network faster and more accurately.

The invention also provides, according to a fourth aspect, a system for training an artificial neural network for at least one inference task on medical input data according to claim 10. ting device configured to perform the method according to any embodiment of the third aspect.

The system according to the fourth aspect is in particular configured to train an artificial neural network for use in any embodiment of the system according to the first aspect and/or in any embodiment of the method according to the second aspect of the present invention.

The invention further provides, according to a fifth aspect, a non-transitory computer-readable data storage medium comprising executable program code configured to, when executed by a computing device, perform the method according to any embodiment of the second aspect.

The invention also provides, according to a sixth aspect, a computer program product comprising executable program code configured to, when executed by a computing device, perform the method according to any embodiment of the second aspect.

The invention further provides, according to a seventh aspect, a non-transitory computer-readable data storage medium comprising executable program code configured to, when executed by a computing device, perform the method according to any embodiment of the third aspect.

The invention also provides, according to an eight aspect, a computer program product comprising executable program code configured to, when executed by a computing device, perform the method according to any embodiment of the third aspect.

The invention will be explained in yet greater detail with reference to exemplary embodiments depicted in the drawings as appended.

The accompanying drawings are included to provide a further understanding of the present invention are incorporated in and constitute a part of the specification. The drawings illustrate the embodiments of the present invention and together with the description serve to illustrate the principles of the invention. Other embodiments of the present invention and many of the intended advantages of the present invention will be readily appreciated as they become better understood by reference to the following detailed description. Like reference numerals designate corresponding similar parts.

The numbering of method steps is intended to facilitate understanding and should not be construed, unless explicitly stated otherwise, or implicitly clear, to mean that the designated steps have to be performed according to the numbering of their reference signs. In particular, several or even all of the method steps may be performed simultaneously, in an over-lapping way or sequentially.
- Fig. 1: shows a schematic block diagram of a system according to an embodiment of the first aspect of the present invention;
- Fig. 2: schematically illustrates a possible result of the system of Fig. 1;
- Fig. 3: shows a schematic flow diagram illustrating a method according to an embodiment of the second aspect of the present invention;
- Fig. 4: shows a schematic flow diagram illustrating a method according to an embodiment of the third aspect of the present invention;
- Fig. 5: shows a schematic block diagram of a system 300 according to an embodiment of the fourth aspect of the present invention;
- Fig. 6: shows a schematic block diagram of a storage medium according to an embodiment of the fifth aspect of the present invention or according to an embodiment of the seventh aspect of the present invention; and
- Fig. 7: shows a schematic block diagram of a computer program product according to an embodiment of the sixth aspect of the present invention or according to an embodiment of the eighth aspect of the present invention.

Although specific embodiments have been illustrated and described herein, it will be appreciated by those of ordinary skill in the art that the variety of alternate and/or equivalent implementations may be substituted for the specific embodiments shown and described without departing from the scope of the present invention. Generally, this application is intended to cover any adaptations or variations of the specific embodiments discussed herein, the scope of the invention being defined uniquely by the appended claims.

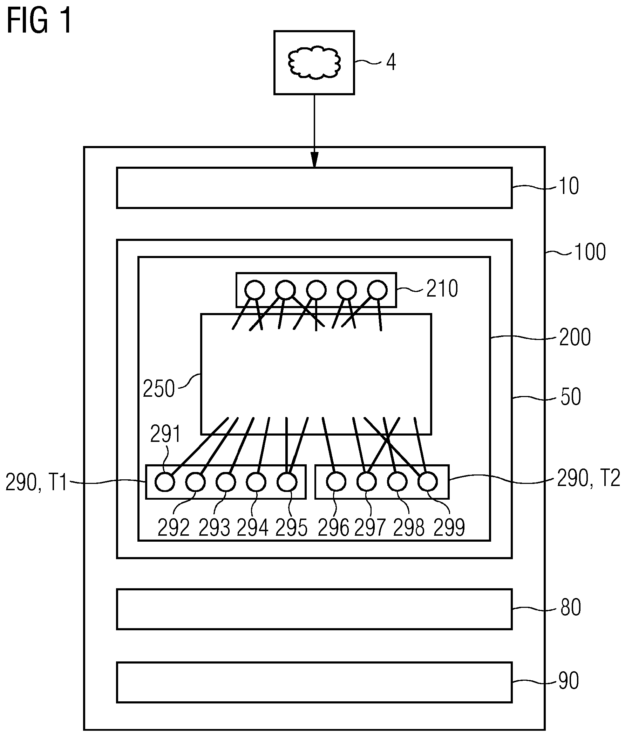

Fig. 1 shows a schematic block diagram of a system 100 for performing at least one inference task on medical input data according to an embodiment of the first aspect of the present invention.

The system 100 comprises at least one input interface 10 and a computing device 50, and may also comprise one or more output interfaces 90.

The computing device 50 may be realized in hardware, such as a circuit or a printed circuit board and/or comprising transistors, logic gates and other circuitry. Additionally, the computing device 50 may be at least partially realized in terms of software. Accordingly, the computing device 50 may comprise a processor (such as at least one CPU and/or at least one GPU) and a memory storing a software or a firmware that is executed by the processor to perform the functions of the computing device. The computing device 50 may also be, partially or completely, implemented as a cloud computing platform.

The computing device is operatively connected to the input interface 10 so as to receive signals from outside the system 100, and is also operatively connected to the output interface 90 so as to output signals out of the system 100. The input interface 10 and/or the output interface 90 may be realized as hardware and/or software, as physical connections and/or wireless connections according to any method known in the art.

The computing device 50 is configured to implement an artificial neural network 200. The artificial neural network 200 comprises an input layer 210, an output layer 290 and at least one hidden layer 250 in between. In particular, the artificial neural network 200 may comprise at least one convolutional layer. Any other known type of layer, of block of layer, method of connections between layers (such as dropout, fully-connected etc.) known in the art may be employed.

In Fig. 1, the open nature of the architecture of the artificial neural network 200 between the input layer 210 and the output layer 290 is schematically illustrated by a box signifying the at least one hidden layer 250. The input layer 210 is shown exemplarily with 5 input nodes but it should be understood that in practice the number of input nodes will be much larger. For example, one input node for each pixel of a medical imaging data file (such as a MRT or CT or PET scan image) may be provided in the input layer 210. Only a few of the connections between the input layer 210 and the at least one hidden layer 250, and between the at least one hidden layer 250 and the output layer 290 are shown for reasons of clarity.

The artificial neural network 200 is configured to receive medical input data as its input and to perform at least one inference task based on the received medical input data, or, in other words, the artificial neural network 200 is configured to process received medical input data so as to generate a result of at least one inference task based thereon. Fig. 1 exemplarily shows an input image 4 being used as the medical input data. The input image 4 may be the result of a medical imaging process, such as an MRT scan, a CT scan, an X-ray scan, a PET scan, an ultrasound scan and/or the like.

The at least one inference task may e.g. be a classification task, a localization task, a detection task and/or the like. The same artificial neural network 200 may be configured to perform more than on inference task, of the same and/or of different types. The artificial neural network 200 may be configured to receive any type of tensor (e.g. a matrix or a vector) as input and to output any type of tensor as its output, wherein different channels of the output may correspond to different inference tasks.

The output layer 290 comprises at least one output node 291, 292, .., 299 for each inference task. In addition, the output layer 290 comprises for at least one inference task of the at least one inference task a plurality of output nodes 291, ..., 299, wherein each output node 291, ... 299 corresponds to one quantile out of a plurality of pre-defined quantiles for that specific inference task. Preferably, for each inference task there is a corresponding plurality of output nodes 291, ..., 299 corresponding to a plurality of pre-defined quantiles for that specific inference task.

As an example, the artificial neural network 200 is shown in Fig. 1 to be configured to generate results for two inference tasks T1, T2. The first inference task T1 is exemplarily solved by five output nodes 291, ..., 295, wherein each corresponds to a different quantile of the first inference task T1. For example, the output value of the first output node 291 may correspond to the 15th percentile of the first inference task T1, the output value of the second output node 292 may correspond to the 30th percentile of the first inference task T1, the output value of the third output node 293 may correspond to the 50th percentile of the first inference task T1, the output value of the fourth output node 294 may correspond to the 70th percentile of the first inference task T1 and the output value of the fifth output node 295 may correspond to the 85th percentile of the first inference task T1.

In other words, percentiles 15, 30, 50, 70 and 85 have been pre-defined for the first inference task T1.

Further in Fig. 1, the second inference task T2 is exemplarily solved by four output nodes 296, ..., 299, wherein each corresponds to a different 4-quantile (or: "quartile"). For example, the output value of the sixth output node 296 may correspond to the first quartile of the second inference task T2, the output value of the seventh output node 297 may correspond to the second quartile of the second inference task T2, the output value of the eight output node 298 may correspond to the third quartile of the second inference task T2, and the output value of the ninth output node 299 may correspond to the fourth quartile of the second inference task T2.

As has been described in the foregoing, the output layer 290 may be configured to so as to generate images with different answers to a specific inference task T1, T2 marked in different colors or different patterns.

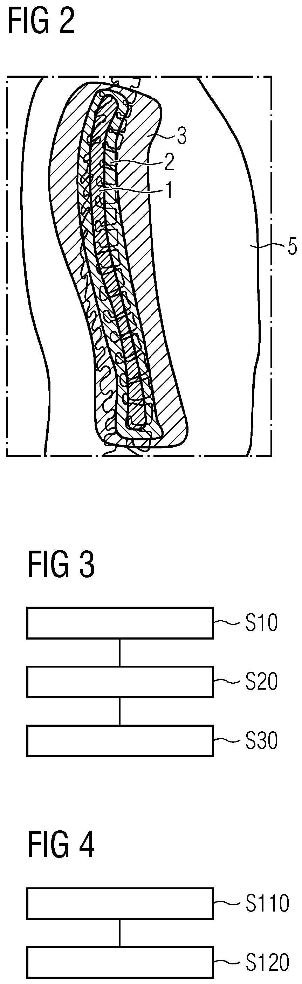

Fig. 2 schematically illustrates a medical image showing a magnetic resonance, MR, cross-section of a human torso. The exemplary inference task here is to mark the human spine therein (or, in other words, to provide a segmentation mask identifying the human spine against the background). Three different segments 1, 2, 3 have been marked therein, corresponding to outputs of three output nodes corresponding to three different quantiles.

For example, the innermost segment 1 may correspond to the results of an output node corresponding to the 90th percentile, i.e. 90% of "virtual raters" agree that these pixels belong to the spine, i.e. solve the given inference task of finding pixels that belong to the spine. The middle segment 2 may correspond to the results of an output node corresponding to the 50th percentile, i.e. 50% of "virtual raters" agree that these pixels belong to the spine. The 50th percentile is the median; in other words, half the virtual raters rate that these pixels belong to the spine, while the other half rates these pixels as "background". The outermost segment 3 may correspond to the results of an output node corresponding to the 10th percentile, i.e. only 10% of "virtual raters" rate that these pixels belong to the spine.

Thus, the user of the system 100 is provided in this example with a clear indication of how reliable, or accurate, the ratings for the different pixels in the X-ray image are, and can act accordingly.

The system 100 may comprise a display 80 (such as a computer monitor, a touch screen, a mobile device screen and/or the like) configured to display to the user the output images with the results of the different quantiles for at least one inference task marked therein visually (or: graphically). Another software module, implementing an algorithm and/or another artificial neural network, may be arranged between the output layer 290 and the display 80 for generating the input of the display 80.

Fig. 3 shows a schematic flow diagram illustrating a method according to an embodiment of the first aspect of the present invention.

Fig. 2 shows a schematic flow diagram illustrating a computer-implemented method for performing at least one inference task on medical input data according to an embodiment of the second aspect of the present invention.

The method according to Fig. 2 may be performed by the system 100 of Fig. 1 and may be adapted and modified according to all variations, options and refinements that are described with respect to the system 100 of Fig. 1 and vice versa.

In a step S10, medical input data, such as at least one medical imaging data file (or: medical scan image) are input into an artificial neural network which is configured to receive medical input data as its input and to perform at least one inference task based on the medical input data. Specifically, this artificial neural network may be the artificial neural network 200 as has been described in the foregoing with respect to Fig. 1.

In a step S20, the medical input data are processed by the artificial neural network 200, e.g. as has been described in the foregoing with respect to Fig. 1.

In a step S30, for at least one inference task T1, T2 of the at least one inference task T1, T2, an output value corresponding to each quantile out of a plurality of pre-defined quantiles is output by the artificial neural network 200. Preferably, as depicted schematically in Fig. 1, an output value corresponding to each quantile out of a plurality of pre-defined quantiles is output by the artificial neural network 200 for each inference task T1, T2 solved by the artificial neural network 200.

The outputting S30 of the output values may be performed by an output interface 90 of a system 100 that comprises a computing device 50 implementing the artificial neural network 200 and/or graphically (or visually) by a display 80 as has been described in the foregoing.

Fig. 4 shows a schematic flow diagram illustrating a method according to an embodiment of the third aspect of the present invention, i.e. a method for training an artificial neural network for at least one inference task on medical input data.

The method of Fig. 4 is in particular configured to train an artificial neural network for use in any embodiment of the system according to the first aspect and/or in any embodiment of the method according to the second aspect of the present invention. As such, the method of Fig. 4 may be adapted and modified according to all variations, options and refinements that are described with respect to the system 100 of Fig. 1 (or the method of Fig. 3) and vice versa.

According to Fig. 4, in a step S110, an artificial neural network 200 is provided which is configured to receive medical input data as its input and to perform at least one inference task T1, T2 based on the medical input data, wherein the artificial neural network 200 comprises an output layer 290 with, for at least one inference task T1, T2 of the at least one inference task T1, T2, a plurality of output nodes 291, ... 299, wherein each output node 291, ..., 299 corresponds to one quantile out of a plurality of pre-defined quantiles.

In a step S120, said provided artificial neural network 200 is trained with labelled training data and using a cost function which comprises an individual loss term for each of the pre-defined quantiles.

Preferably, the individual loss terms utilize a weighted L1 norm. The cost function may comprise a weighted sum over the individual loss terms. Also preferably, the cost function penalizes when an output node corresponding to a higher quantile outputs a value that is lower than an output node corresponding to a lower quantile for the same inference task.

For example, the individual loss term Lqₖ for a specific quantile k may be given by: ${Lq}_{k} = {a}_{k} ∗ xi , if xi \geq 0 ,$ and ${Lq}_{k} = \left({a}_{k}-1\right) * xi , if xi < 0 ,$ wherein xᵢ is the difference between a label yᵢ and a predicted value, and wherein aₖ is a constant chosen for each quantile k. the total cost function for the training in step S120 may be a normalized sum over the loss individual loss terms Lqₖ, or it may be a normalized weighted sum.

In Python (registered trademark) pseudo-code, the individual loss term Lqk (or: quantile loss) based on the L1 norm may be defined by:

```
          def quantile_lossL1(q, y, f):
            # q: Quantile to be evaluated, e.g., 0.5 for me-
          dian.
            # y: True value.
            # f: Fitted (predicted) value. e=y-f
return np.maximum(q*e, (q-1)*e)
```

wherein "np" stands for the numpy package.

In general, loss functions need not be limited to be based on the L1 norm. Instead, the concrete norm can be matched to the assumed noise distribution of the problem, for example as has been described in Lehtinen et al., Noise2Noise: Learning Image Restoration without Clean Data", available e.g. at arXiv:1803.04189v3 at October 29, 2018.

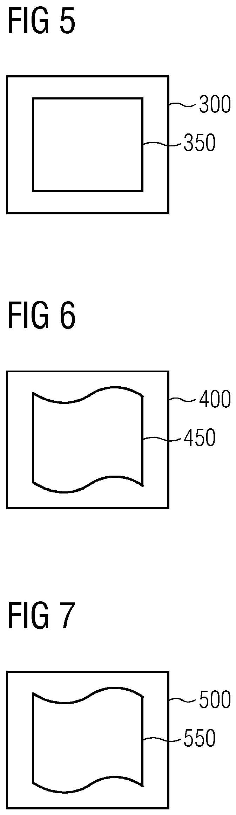

Fig. 5 shows a schematic block diagram of a system 300 according to an embodiment of the fourth aspect of the present invention, i.e. of a system for training an artificial neural network for at least one inference task on medical input data. The system 300 comprises a computing device 350 configured to perform the method of Fig. 4.

Fig. 6 shows a schematic block diagram of a non-transitory, computer-readable data storage medium according to an embodiment of the fifth aspect or of the seventh aspect, i.e. a non-transitory-computer-readable data storage medium 400 comprising executable program code 450 configured to, when executed by a computing device 50, 350, perform the method according to Fig. 2 and/or the method according to Fig. 4.

Fig. 7 shows a schematic block diagram of a computer program product 500 according to an embodiment of the sixth aspect or of the eighth aspect, i.e. a computer program product 500 comprising executable program code 550 configured to, when executed by a computing device 50, 350, perform the method according to Fig. 2 and/or the method according to Fig. 4.

## Claims

1. A system (100) for performing at least one inference task (T1, T2) on medical input data, the system (100) comprising:
a computing device (50) configured to implement an artificial neural network, ANN (200),
- wherein the ANN (200) is configured to receive medical input (4) data as its input and to perform at least one inference task (T1, T2) based on the medical input data (4),
- wherein the ANN (200) comprises an output layer (290) with, for at least one inference task (T1, T2) of the at least one inference task (T1, T2), a plurality of output nodes (291,...299),
- wherein each output node (291, ..., 299) of said plurality corresponds to one quantile out of a plurality of pre-defined quantiles,
- wherein the output layer (290) comprises one respective output node (291, ..., 299) corresponding to each quantile out of the plurality of pre-defined quantiles for each inference task (T1, T2),
- wherein the artificial neural network, ANN (200) is configured to receive medical imaging data (4) as the medical input data, and
- wherein at least one inference task (T1, T2) comprises classification of features of the medical imaging data (4) into at least one of a plurality of classes.

2. The system of claim 1, wherein the quantiles are percentiles.

3. The system according to any of the preceding claims,
wherein the system (100) is configured to output at least one output image (5), and wherein output values (1, 2, 3) of output nodes (291, ..., 299) corresponding to different quantiles for the same inference task (T1, T2) are indicated differently in said at least one output image (5).

4. The system according to any of the preceding claims,
wherein the ANN (50) is configured to output at least one output image (5), and wherein output values (1, 2, 3) of output nodes (291, ..., 299) corresponding to different quantiles for the same inference task (T1, T2) are indicated differently in said at least one output image (5).

5. A computer-implemented method for performing at least one inference task (T1, T2) on medical input data (4), the method comprising:
inputting (S10) medical input data (4) into an artificial neural network, ANN (200), wherein the ANN (200) is configured to receive medical input data as its input and to perform at least one inference task (T1, T2) based on the medical input data (4);
processing (S20) the medical input data (4) by the ANN (200); and
outputting (S30), by the artificial neural network, for at least one inference task (T1, T2) of the at least one inference task (T1, T2), an output value (1, 2, 3) corresponding to each quantile out of a plurality of pre-defined quantiles, wherein an output value (1, 2, 3) corresponding to each quantile out of the plurality of pre-defined quantiles is output for each inference task (T1, T2), and wherein medical imaging data (4) are input as the medical input data, and wherein at least one inference task (T1, T2) comprises classification of features of the medical imaging data (4) into at least one of a plurality of classes.

6. A computer-implemented method for training an artificial neural network, ANN (200) for at least one inference task (T1, T2) on medical input data (4), the method comprising:
providing (S110) an ANN (200) configured to receive medical input data (4) as its input and to perform at least one inference task (T1, T2) based on the medical input data (4);
- wherein the ANN (200) comprises an output layer (290) with, for at least one inference task (T1, T2) of the at least one inference task (T1, T2), a plurality of output nodes (291, ..., 299), wherein each output node (291, ..., 299) of said plurality corresponds to one quantile out of a plurality of pre-defined quantiles,
- wherein an output value (1, 2, 3) corresponding to each quantile out of the plurality of pre-defined quantiles is output for each inference task (T1, T2), and
- wherein medical imaging data (4) are input as the medical input data, and wherein at least one inference task (T1, T2) comprises classification of features of the medical imaging data (4) into at least one of a plurality of classes; and
training (S120) the ANN (200) with labelled training data and using a cost function which comprises an individual loss term for each of the pre-defined quantiles.

7. The method of claim 6,
wherein the individual loss terms utilize a weighted L1 norm.

8. The method of claim 6 or 7,
wherein the cost function comprises a weighted sum over the individual loss terms.

9. The method according to any of the claims 6 to 8,
wherein the cost function penalizes when an output node corresponding to a higher quantile outputs a value that is lower than an output node corresponding to a lower quantile for the same inference task (T1, T2).

10. A system (300) for training an artificial neural network, ANN (200) for at least one inference task (T1, T2) on medical input data, comprising a computing device (350) configured to perform the method of any of claims 6 to 9.

11. A non-transitory computer-readable data storage medium (400) comprising executable program code (450) which, when executed by a computing device (50; 350), causes the computing device to perform a method according to any of claims 5 to 9.

12. A computer program product (500) comprising executable program code (550) which, when executed by a computing device (50; 350), causes the computing device to a method according to any of claims 5 to 9.

## Patentansprüche

1. System (100) zur Durchführung wenigstens einer Inferenzaufgabe (T1, T2) an medizinischen Eingabedaten, wobei das System (100) umfasst:
eine Rechenvorrichtung (50), ausgelegt zum Implementieren eines künstlichen neuronalen Netzes, ANN (200),
- wobei das ANN (200) dazu ausgelegt ist, medizinische Eingabedaten (4) als seine Eingabe zu empfangen und wenigstens eine Inferenzaufgabe (T1, T2) auf der Basis der medizinischen Eingabedaten (4) durchzuführen,
- wobei das ANN (200) eine Ausgabeschicht (290) mit, für wenigstens eine Inferenzaufgabe (T1, T2) der wenigstens einen Inferenzaufgabe (T1, T2), einer Mehrzahl von Ausgabeknoten (291, ..., 299) umfasst,
- wobei jeder Ausgabeknoten (291, ..., 299) der Mehrzahl einem Quantil aus einer Mehrzahl von vordefinierten Quantilen entspricht,
- wobei die Ausgabeschicht (290) einen jeweiligen Ausgabeknoten (291, ..., 299) umfasst, der jedem Quantil aus der Mehrzahl von vordefinierten Quantilen für jede Inferenzaufgabe (T1, T2) entspricht,
- wobei das künstliche neuronale Netz, ANN (200), dazu ausgelegt ist, medizinische Bildgebungsdaten (4) als die medizinischen Eingabedaten zu empfangen, und
- wobei wenigstens eine Inferenzaufgabe (T1, T2) eine Klassifizierung von Merkmalen der medizinischen Bildgebungsdaten (4) in wenigstens eine aus einer Mehrzahl von Klassen umfasst.

2. System nach Anspruch 1, wobei die Quantile Perzentile sind.

3. System nach einem der vorstehenden Ansprüche,
wobei das System (100) dazu ausgelegt ist, wenigstens ein Ausgabebild (5) auszugeben, und wobei Ausgabewerte (1, 2, 3) von Ausgabeknoten (291, ..., 299), die unterschiedlichen Quantilen für die gleiche Inferenzaufgabe (T1, T2) entsprechen, in dem wenigstens einen Ausgabebild (5) unterschiedlich angegeben sind.

4. System nach einem der vorstehenden Ansprüche,
wobei das ANN (50) dazu ausgelegt ist, wenigstens ein Ausgabebild (5) auszugeben, und wobei Ausgabewerte (1, 2, 3) von Ausgabeknoten (291, ..., 299), die unterschiedlichen Quantilen für die gleiche Inferenzaufgabe (T1, T2) entsprechen, in dem wenigstens einen Ausgabebild (5) unterschiedlich angegeben sind.

5. Computerimplementiertes Verfahren zur Durchführung wenigstens einer Inferenzaufgabe (T1, T2) an medizinischen Eingabedaten (4), wobei das Verfahren umfasst:
Eingeben (S10) medizinischer Eingabedaten (4) in ein künstliches neuronales Netz, ANN (200), wobei das ANN (200) dazu ausgelegt ist, medizinische Eingabedaten als seine Eingabe zu empfangen und wenigstens eine Inferenzaufgabe (T1, T2) auf der Basis der medizinischen Eingabedaten (4) durchzuführen;
Verarbeiten (S20) der medizinischen Eingabedaten (4) durch das ANN (200); und
Ausgeben (S30), durch das künstliche neuronale Netz, für wenigstens eine Inferenzaufgabe (T1, T2) der wenigstens einen Inferenzaufgabe (T1, T2), eines Ausgabewerts (1, 2, 3), der jedem Quantil aus einer Mehrzahl von vordefinierten Quantilen entspricht, wobei ein Ausgabewert (1, 2, 3), der jedem Quantil aus der Mehrzahl von vordefinierten Quantilen entspricht, für jede Inferenzaufgabe (T1, T2) ausgegeben wird, und wobei medizinische Bildgebungsdaten (4) als die medizinische Eingabedaten eingegeben werden und wobei wenigstens eine Inferenzaufgabe (T1, T2) eine Klassifizierung von Merkmalen der medizinischen Bildgebungsdaten (4) in wenigstens eine aus einer Mehrzahl von Klassen umfasst.

6. Computerimplementiertes Verfahren zum Trainieren eines künstlichen neuronalen Netzs, ANN (200), für wenigstens eine Inferenzaufgabe (T1, T2) an medizinischen Eingabedaten (4), wobei das Verfahren umfasst:
Bereitstellen (S110) eines ANN (200), das dazu ausgelegt ist, medizinische Eingabedaten (4) als seine Eingabe zu empfangen und wenigstens eine Inferenzaufgabe (T1, T2) auf der Basis der medizinischen Eingabedaten (4) durchzuführen;
- wobei das ANN (200) eine Ausgabeschicht (290) mit, für wenigstens eine Inferenzaufgabe (T1, T2) der wenigstens einen Inferenzaufgabe (T1, T2), einer Mehrzahl von Ausgabeknoten (291, ..., 299) umfasst, wobei jeder Ausgabeknoten (291, ..., 299) der Mehrzahl einem Quantil aus einer Mehrzahl von vordefinierten Quantilen entspricht,
- wobei ein Ausgabewert (1, 2, 3), der jedem Quantil aus der Mehrzahl von vordefinierten Quantilen entspricht, für jede Inferenzaufgabe (T1, T2) ausgegeben wird, und
- wobei medizinische Bildgebungsdaten (4) als die medizinischen Eingabedaten eingegeben werden und wobei wenigstens eine Inferenzaufgabe (T1, T2) Klassifizierung von Merkmalen der medizinischen Bildgebungsdaten (4) in wenigstens eine aus einer Mehrzahl von Klassen umfasst; und
Trainieren (S120) des ANN (200) mit gekennzeichneten Trainingsdaten und Verwenden einer Kostenfunktion, die für jedes der vordefinierten Quantile einen individuellen Verlustterm umfasst.

7. Verfahren nach Anspruch 6,
wobei die einzelnen Verlustterme eine gewichtete L1-Norm einsetzen.

8. Verfahren nach Anspruch 6 oder 7,
wobei die Kostenfunktion eine gewichtete Summe über die einzelnen Verlustterme umfasst.

9. Verfahren nach einem der Ansprüche 6 bis 8,
wobei die Kostenfunktion bestraft, wenn ein Ausgabeknoten, der einem höheren Quantil entspricht, einen Wert ausgibt, der niedriger ist als ein Ausgabeknoten, der einem niedrigeren Quantil für die gleiche Inferenzaufgabe entspricht (T1, T2).

10. System (300) zum Trainieren eines künstlichen neuronalen Netzes, ANN (200) für wenigstens eine Inferenzaufgabe (T1, T2) an medizinischen Eingabedaten, umfassend eine Rechenvorrichtung (350), die dazu ausgelegt ist, das Verfahren nach einem der Ansprüche 6 bis 9 durchzuführen.

11. Nichtflüchtiges computerlesbares Datenspeichermedium (400), umfassend ausführbaren Programmcode (450), der bei Ausführung durch eine Rechenvorrichtung (50; 350) die Rechenvorrichtung veranlasst, ein Verfahren nach einem der Ansprüche 5 bis 9 durchzuführen.

12. Computerprogrammprodukt (500), umfassend ausführbaren Programmcode (550), der bei Ausführung durch eine Rechenvorrichtung (50; 350) die Rechenvorrichtung veranlasst, ein Verfahren nach einem der Ansprüche 5 bis 9 durchzuführen.

## Revendications

1. Un système (100) pour effectuer au moins une tâche (T1, T2) d'inférence sur une donnée médicale d'entrée, le système (100) comprenant :
un dispositif (50) informatique configuré pour mettre en œuvre un réseau neuronal artificiel, ANN (200),
- dans lequel l'ANN (200) est configuré pour recevoir une donnée médicale d'entrée (4) à son entrée et pour effectuer au moins une tâche (T1, T2) d'inférence sur la base de la donnée (4) médicale d'entrée,
- dans lequel l'ANN (200) comprend une couche (290) de sortie ayant, pour au moins une tâche (T1, T2) d'inférence de la au moins une tâche (T1, T2) d'inférence, une pluralité de nœuds (291, ..., 299) de sortie,
- dans lequel chaque nœud (291, ..., 299) de sortie de ladite pluralité correspond à un quantile parmi une pluralité de quantiles définis à l'avance,
- dans lequel la couche (290) de sortie comprend un nœud (291, ..., 299) respectif de sortie correspondant à chaque quantile parmi la pluralité de quantiles définis à l'avance pour chaque tâche (T1, ..., T2) d'inférence,
- dans lequel le réseau neuronal artificiel ANN (200) est configuré pour recevoir une donnée (4) médicale d'imagerie comme donnée médicale d'entrée, et
- dans lequel au moins une tâche (T1, T2) d'inférence comprend une classification de caractéristiques de la donnée (4) d'imagerie médicale dans au moins l'une d'une pluralité de classes.

2. Le système de la revendication 1, dans lequel les quantiles sont des pourcentiles.

3. Le système suivant l'une des revendications précédentes, dans lequel le système (100) est configuré pour sortir au moins une image (5) de sortie, et dans lequel des valeurs (1, 2, 3) de sortie des nœuds (291, ..., 299) de sortie correspondant à des quantiles différents pour la même tâche (T1, T2) d'inférence sont indiquées différemment dans ladite au moins une image (5) de sortie.

4. Le système suivant l'une des revendications précédentes, dans lequel l'ANN (50) est configuré pour sortir au moins une image (5) de sortie, et dans lequel des valeurs (1, 2, 3) de sortie de nœuds (291, ..., 299) de sortie correspondant à des quantiles différents pour la même tâche (T1, T2) d'inférence sont indiquées différemment dans ladite au moins une image (5) de sortie.

5. Un procédé mis en œuvre par ordinateur pour effectuer au moins une tâche (T1, T2) d'inférence sur une donnée (4) médicale d'entrée, le procédé comprenant :
entrer (S10) une donnée (4) médicale d'entrée dans un réseau neuronal artificiel ANN (200), dans lequel l'ANN (200) est configuré pour recevoir une donnée médicale d'entrée à son entrée et pour effectuer au moins une tâche (T1, T2) d'inférence sur la base de la donnée (4) médicale d'entrée ;
traiter (S20) la donnée (4) médicale d'entrée par l'ANN (200) ; et
sortir (S30), par le réseau neuronal artificiel, pour au moins une tâche (T1, T2) d'inférence de la au moins une tâche (T1, T2) d'inférence, une valeur (1, 2, 3) de sortie correspondant à chaque quantile parmi une pluralité de quantiles définis à l'avance, dans lequel une valeur (1, 2, 3) de sortie correspondant à chaque quantile parmi la pluralité de quantiles définis à l'avance est sortie pour chaque tâche (T1, T2) d'inférence, et dans lequel des données (4) médicales d'imagerie sont entrées comme la donnée médicale d'entrée, et dans lequel au moins une tâche (T1, T2) d'inférence comprend un classement de caractéristiques de la donnée (4) médicale d'imagerie dans au moins l'une d'une pluralité de classes.

6. Un procédé mis en œuvre par ordinateur pour faire l'apprentissage d'un réseau neuronal artificiel ANN (200) pour au moins une tâche (T1, T2) d'inférence sur une donnée (4) médicale d'entrée, le procédé comprenant :
se procurer (S110) un ANN (200) configuré pour recevoir une donnée (4) médicale d'entrée à son entrée et pour effectuer au moins une tâche (T1, T2) d'inférence sur la base de la donnée (4) médicale d'entrée ;
- dans lequel l'ANN (200) comprend une couche (290) de sortie ayant, pour au moins une tâche (T1, T2) d'inférence de la au moins une tâche (T1, T2) d'inférence, une pluralité de nœuds (291, ..., 299) de sortie, dans lequel chaque nœud (291, ..., 299) de sortie de ladite pluralité correspond à un quantile parmi une pluralité de quantiles définis à l'avance,
- dans lequel une valeur (1, 2, 3) de sortie correspondant à chaque quantile parmi la pluralité de quantiles définis à l'avance est sortie pour chaque tâche (T1, T2) d'inférence, et
- dans lequel des données (4) médicales d'imagerie sont entrées comme la donnée médicale d'entrée, dans lequel au moins une tâche (T1, T2) d'inférence comprend un classement de caractéristiques des données (4) médicales d'imagerie dans au moins l'une d'une pluralité de classes ; et
faire subir (S120) un apprentissage à l'ANN (200) par des données étiquetées d'apprentissage et utiliser une fonction de coût, qui comprend un terme individuel de perte pour chacun des quantiles définis à l'avance.

7. Le procédé de la revendication 6,
dans lequel les termes individuels de perte utilisent une norme L1 pondérée.

8. Le procédé de la revendication 6 ou 7,
dans lequel la fonction de coût comprend une somme pondérée sur les termes individuels de perte.

9. Le procédé suivant l'une quelconque des revendications 6 à 8,
dans lequel la fonction de coût pénalise lorsqu'un nœud de sortie correspondant à un quantile supérieur sort une valeur, qui est inférieure à celle d'un nœud de sortie correspondant à un quantile inférieur pour la même tâche (T1, T2) d'inférence.

10. Un système (300) d'apprentissage d'un réseau neuronal artificiel ANN (200) pour au moins une tâche (T1, T2) d'inférence sur une donnée médicale d'entrée comprenant un dispositif (350) informatique configuré pour effectuer le procédé de l'une quelconque des revendications 6 à 9.

11. Un support (400) de mémoire non transitoire de données déchiffrables par ordinateur comprenant un code (450) de programme exécutable, qui, lorsqu'il est exécuté par un dispositif (50 ; 350) informatique, fait que le dispositif informatique effectue un procédé suivant l'une quelconque des revendications 5 à 9.

12. Un produit (500) de programme d'ordinateur comprenant un code (550) de programme exécutable, qui, lorsqu'il est exécuté par un dispositif (50 ; 350) informatique, fait que le dispositif informatique exécute un procédé suivant l'une quelconque des revendications 5 à 9.
